Europäisches Patentamt

European Patent Office

Office européen des brevets

(11) Publication number: 0 492 005 A1

# EUROPEAN PATENT APPLICATION

(21) Application number: 90203457.8

(22) Date of filing: 20.12.90

(51) Int. Cl.5: F24J 2/00, F24J 2/48

(43) Date of publication of application:
01.07.92 Bulletin 92/27

(84) Designated Contracting States:
AT BE CH DE DK ES FR GB GR IT LI LU NL SE

(71) Applicant: Seidel, Günther
132 Route de Luxembourg
L-7241 Bereldange(LU)

(72) Inventor: Seidel, Günther
Route de Luxembourg, 132
L-7241 Bereldange(LU)
Inventor: Urbanek, Andrzej
Ul Polna 6
PL-05 420 Jozefow(PL)

(74) Representative: Waxweiler, Jean et al
OFFICE DENNEMEYER S.à.r.l. P.O. Box 1502
L-1015 Luxembourg(LU)

(54) Wall for solar radiation absorption.

(57) Wall for solar radiation absorption adapted to be secured to a massive wall (8) for transferring heat thereto, said wall comprising an external section (1, 3) permitting transmission of solar radiations and including an insulation layer (3), an absorber (5) disposed behind said insulation layer (3), and heat transfer means (6) associated with said absorber (5), said heat transfer means being thermally connected to said absorber (5) to receive the generated heat therefrom, and said heat transfer means (6) being adapted to be inserted in said massive wall (8) to thereby transmit said heat from said absorber (5) to said massive wall (8).

Fig. 1

The present invention relates to a novel construction of a wall for absorption of solar radiations. The invention also relates to the media used for the construction of solar walls and to the way of installing the wall. For absorbing solar radiation and transferring thermal energy to massive walls.

In particular, the invention is directed to the construction of the absorber of the radiations as well to the materials used for construction of the absorber. Further this invention is related to the transmission of the absorbed energy towards the interior of the massive wall.

The literature concerning the constructions of solar walls is very wide. Known solar walls generally comprise an external plate and an insulation layer disposed behind the external plate, an absorber behind the insulation layer, and a massive wall section that can be spaced from the absorber. The external plate and the insulation layer allow transmission of solar radiations to the absorber.

These known constructions of solar walls concern the absorption of solar energy at the external surface and the transmission of heat toward the massive wall made of any construction material, and preferably concrete, stones, bricks etc. The massive wall is generally covered with glazing panels and a transparent insulation layer is placed between two glasses. The glazing panels can be spaced from the massive wall by an air gap. Heat is generated at the outside surface of the massive wall section and it is transferred to the inside thereof by conduction through ceramic material of the massive wall section.

One type of arrangement for solar walls is disclosed in European patent No. 0 123 091. In a solar wall of this type, a transparent insulation is placed between a transparent plate and any absorbing surface being either separated from or sticked to the massive wall for storing solar energy. The transparent plate is spaced from the absorber with their pegs.

The known constructions of solar walls have disadvantages which influence the efficiency of solar energy absorption and adversely affect heat transmission. The known constructions do not consider the opportunity of providing vacuum either inside the glazing panel incorporating thermal insulation or in the space between the transparent external plate and the absorber.

The transparent insulation according to the known constructions is placed in panels which have very large distance edgings based on alumina. The profiles used for these edgings have a high thermal conductivity thereby allowing considerable outflow of heat from the absorber to the surrounding atmosphere. The heat outflow in known constructions is typically as high as 20 % of the solar energy absorbed by the panel.

The known walls with absorbers at the surface of the massive wall section as well as the known walls with absorber plates sticked together with the massive wall section do not furnish an effective transport of heat from the absorber to the inside of massive wall section. This is due to the low thermal conductivity of the massive wall section and due to the difficulties of arranging a good contact of the solar absorber made of materials other than ceramics with the ceramic massive wall section. An air gap is generally present in the last case.

In order to improve the heat storing capacity of solar walls thereby providing a higher efficiency of the use of solar energy, a technique for transferring heat to the inside of the massive wall section was developed, as explained in greater detail in European patent application No. 90630146.0 filed August 27, 1990. In that prior application, there is described a wall for radiation absorption, wherein a second insulation layer is disposed between the massive wall section and the absorber such that an intermediate cavity is provided between the second insulation layer and the absorber. A heat transporting fluid is used for transferring heat to the massive wall section, said heat transporting fluid passing through the intermediate cavity and through the massive wall section. A problem of this prior solar wall progress is that the massive wall section must be newly constructed to provide room for the fluid medium used for transferring heat.

Thus, there is a clear need for a solar wall can be used with existing walls of buildings without requiring a new construction for the massive wall section.

It is therefore an object of the present invention to provide a wall for solar radiation absorption that overcomes the disadvantages mentioned above inherent to the known walls of this type. In particular, an object of the invention is to provide a solar wall having a better efficiency of absorption and storing of solar energy, improving the conditions of heat transfer from the absorber to the inside of the massive wall, and preventing outflow of heat to the surrounding atmosphere.

According to the invention, these objects are achieved by providing a solar wall in which heat transfer means are thermally connected to the absorber behind the insulation layer, to receive the heat therefrom and to transfer the heat to the massive wall.

According to the principles of the invention, the heat transfer means, such as fins or rods extending either generally perpendicular or inclined relative to the absorber, are used to cause the heat to be conducted relatively quickly and uniformly from the absorber to the massive wall. Such heat transfer means are therefore thermally connected to the absorber and are adapted to be inserted into the massive wall.

In a preferred embodiment of the invention, a tight chamber is provided for the transparent thermal insulation, with the rear side of the chamber being the solar energy absorber from which the solar energy is transported to the inside of the massive wall by high thermal conductivity heat transfer means installed in conductive elastomer coatings placed deeply inside of the ceramic massive wall and having excellent contact with the material of the massive wall. On the other hand, the side walls of the chamber can be made of material furnishing low heat flow from the absorber to the surrounding air.

The wall according to the present invention shows high transparency for solar radiation, high thermal insulation effect as well as ability to transport collected heat to the inner part of the massive wall. The solar wall according to the present invention can be used with ceramic walls of existing buildings.

The construction of solar wall being the subject of the present invention distributes the collected heat uniformly in a whole cross section of the massive wall. This results from the use of the heat transfer elements which transports the heat from the absorber to the massive wall.

The construction of solar wall according to the present invention prevents heat dissipation to the surrounding air. This is caused by the layer of insulation being placed between the absorber and the external plate and surrounding ambient air and, at the same time, by the provision of side walls between the bottom of the absorber and the external plate which are of a material and thickness such as to achieve these purposes.

In the preferred embodiment of the invention the heat transfer means comprise protuberances extending therefrom for cooperation with a conductive coating placed within the massive wall to resist any forces trying to separate the solar wall from the massive wall. At the same time, such protuberances can also assist to improve the heat transfer to the massive wall.

The above features of the solar wall according to the present invention are distinctly different compared to the known constructions.

Other objects and other features and advantages become more readily apparent upon reference to the following description when taken in conjunction with the appended drawings, in which:

Fig. 1 is a cross-sectional view of a first embodiment of the present invention,

Fig. 2 is a cross-sectional view of a second embodiment of the invention with a pan made of resin,

Fig. 3 is a cross-sectional view of a third embodiment of the invention with a pan made of resin and metal, and

Fig. 4 is an enlarged view of Fig. 2 showing the connection of the heat transfer means to the absorber,

Fig. 5 is an enlarged cross sectional view illustrating another form of the invention that may be employed,

Fig. 6 is a perspective view of a portion of fin plate showing a form of contour that may be employed,

Fig. 7 is a perspective view similar to Fig. 6 showing another form of contour that may be employed,

Fig. 8 is a fragmentary cross-sectional view illustrating still another form of the invention with spirally extending heat transfer means,

Fig. 9 is a fragmentary cross-sectional view illustrating an embodiment of the invention utilizing an absorber and heat transfer means formed as a one piece element.

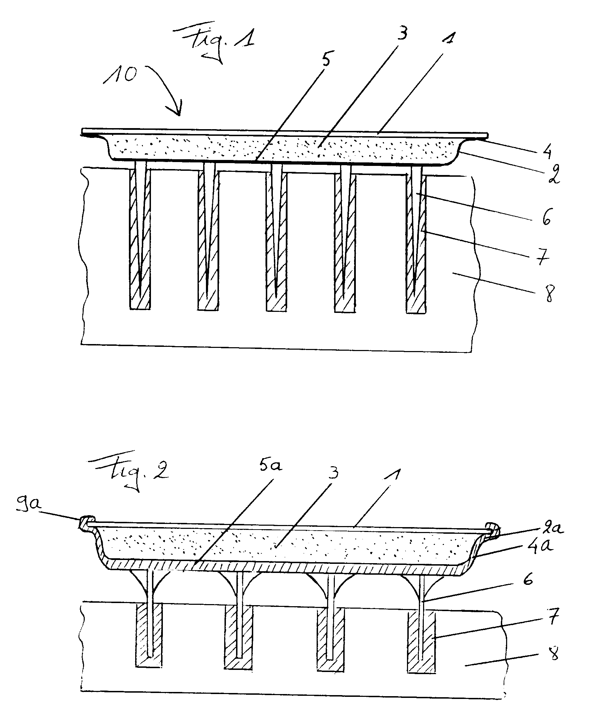

A solar wall according to the invention is shown schematically in Fig. 1. This type of solar wall 10 for storing heat from solar radiation comprises two main parts, namely an external wall section having an insulation layer 3 and an absorber pan 2 behind the insulation layer 3. The external section permits transmission of solar radiations.

An external translucent or transparent plate 1 covers the pan 2 enclosing a translucent or transparent thermal insulation 3. The edges 4 of the pan 2 are tightly sticked to the external transparent plate 1. The bottom 5 of the pan 2 is an absorber covered with high absorbancy paint. In order to enhance the heat dissipation from the absorber 5 inwardly through the massive wall 8, a plurality of heat transfer elements 6 are associated with the absorber 5. Such heat transfer elements 6 have one end thermally connected to the absorber 5 to receive the heat therefrom, and have the other end disposed inside massive wall 8.

As shown in Fig. 1, the heat transfer means 6 comprises a plurality of fins or ribs on the rear side of the absorber 5 which are disposed generally perpendicularly relative to the absorber 5 so as to be inserted within corresponding bores of the massive wall 8. In an alternate construction of the solar wall a plurality of rods 6 aligned vertically, extending rearwardly and connected to the absorber 5 are used. The plurality of fins or rods 6 increase the surface area in direct contact with the massive wall 8, and hence the rate at which heat is transferred to the massive wall 8. In this way, the amount and degree of heat transfer can be optimized by using heat transfer elements 6 of appropriate number, shape and length.

With the present invention it was found that because of the use of the heat transfer elements 6, faster and more uniform heating of the massive wall 8 can be obtained. At the same time, it has been found that these heat transfer elements 6 can serve as fasteners to firmly connect the solar wall to the massive wall 8. The heat transfer elements 6 are firmly connected to the rear side of the absorber 5, are coated with an elastic thermal conductor 7, and then are inserted inside bores provided in the ceramic massive wall 8.

Due to the shape of the pan 2, no separate element is necessary for spacing the bottom 5 of the absorber from the external plate 1. The external translucent plate 1 can be made of glass, preferably glass with low iron content. The thickness of this external plate 1 is as small as possible to avoid losses of energy from the solar radiations. Plastics like polymethyl metacrylate are also applicable; however, due to the high resistance of glass against surrounding atmosphere, glass is preferred as material for the external cover of the wall. The external plate 1 and the pan 2 which is sticked thereto at the edges, defines a closed chamber within which a transparent thermal insulation layer 3 is placed. The thermal insulation 3 can be made of silica aerogels or other appropriate materials (e.g. polycarbonates). The insulation material fills the whole inner part of the pan 2. The particles of the insulation layer 3 can be pressed between the external plate 1 and the pan 2.

The pan 2 consists of a bottom 5 being the absorber for solar energy as well as of side walls surrounding the bottom 5. The inside surface of the bottom 5 of the pan 2 is covered with high absorbent paint while the flat edges are sticked together with the external translucent or transparent plate 1. The bottom 5 of the pan 2 is preferably strengthened by an appropriate forming to create grooves or riffles of any shape and dimensions.

The bottom 5 of the pan 2 (the absorber) is preferably made of a material showing high thermal conductivity metal while the side walls 4 of the pan 2 can be made either of a thin plate of the same material or of an insulating material preventing the heat flow out of the chamber to the surrounding atmosphere. There are several options available for the construction of the pan 2. The pan 2 can be made of one piece of metal by pressing it to obtain the shape of the pan 2 as well as to obtain side walls 4 much more thin than the bottom part 5. This limits the heat outflow to the surrounding atmosphere . The pan can also be made of a few pieces of metal welded together, these metal pieces being also of appropriate thickness for limiting the outflow of heat to the atmosphere.

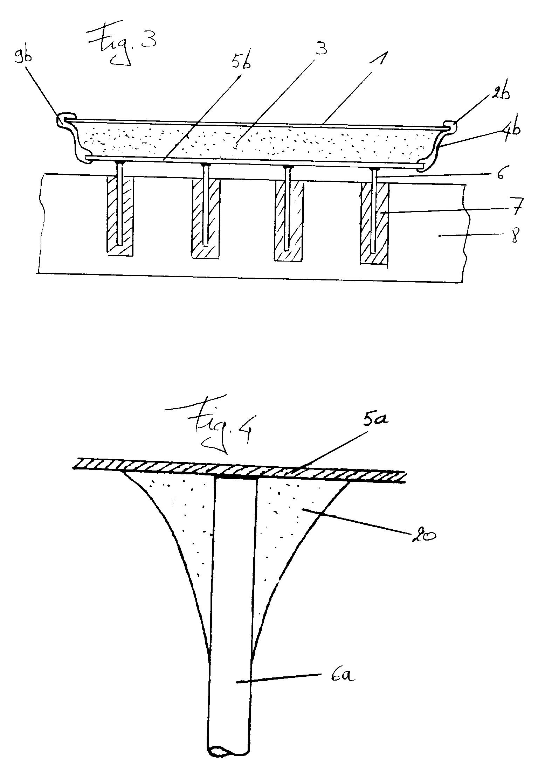

Fig. 2 shows an embodiment of the invention in which the pan 2a is made of resin and has a bottom 5a of high thermal conductivity and side walls 4a of low thermal conductivity.

In Fig. 2, the glass plate 1 covering the chamber is similar to that of in Fig. 1. However, the pan 2a as constructed is based on resins, such as polyester or vinyloester or other resins. There are two main parts of the pan 2a differing in composition as well as in thermal conductivity. The bottom part 5a of the resin pan 2a is a mixture of any resins with powder, chips, or any other elements of metal, graphite or other materials showing a high thermal conductivity. The bottom 5a of the pan 2a can also be made by incorporating metal mesh, folia or perforated or non perforated plate into it when manufacturing the resin to obtain a tight construction. The thickness of bottom 5a of the pan 2a is not limited, except for costs. Contrary to the bottom 5a, the side walls 4a of the pan 2a are either made of resin alone, or they can be made of resin composites containing low thermal conductivity materials, like silica and its derivatives, or foam like organics. The side walls 4a are as thin as possible. They can be sticked to the external glass 1 by using any adhesives as shown in Fig. 1. Alternately glass plate 1 can be incorporated into the end part of side wall 4a of the pan 2a. The frame 9a plays a role of seal edging. Heat transfer elements 6 join the absorber 5a with massive wall section 8 and are laminated together with the bottom 5a of the pan 2a based on resins.

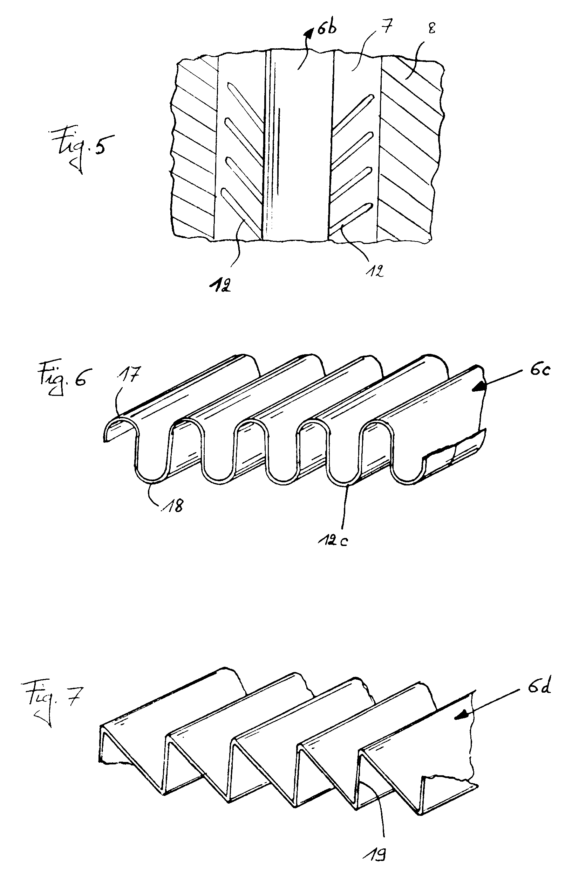

Another construction which fits the requirements according to the present invention is shown in Fig. 3. This wall section is made of glass, metal and resin or resin based composites. In the construction shown in Fig. 3, the edges of external glass plate 1 are incorporated into the resin based frame 9b which is a part of the side walls 4b of the pan. The side walls 4b of the pan 2b are made of any resin of appropriate low heat conductivity. The walls 4b can also be made of resin based composites having any insulating materials as components and preferably silica or organic foams. The resin based side walls 4b prevent substantial losses of heat transported out of the chamber and/or absorber to the surrounding air.

The bottom 5b of the pan 2b is made of any metal which is tightly connected with the resin based side walls 4b. The bottom 5b of the pan 2b is well connected with the heat transfer elements 6 which can be made of metal and welded or soldered to the bottom 5b. The manner of installing the fins or rods 6 inside the massive wall 8 is as in Fig. 1.

The distance between the bottom 5 of the pan 2 and the external transparent plate 1 is not limited. It depends on the thermal insulation properties and solar radiation transmission of insulation layer 3. For silica serogel the distance is typically from 16mm to 20mm while for polycarbonate honeycombs it can be 50 mm or more.

The edges of the pan are tightly sticked together with the external transparent plate 1 to prevent the penetration of air and moisture to the interior of the chamber. Vacuum can be advantageously provided within the chamber to enhance the insulating properties of the translucent insulation layer 3. A opening connected to a valve means to arrange the vacuum within the chamber can be conveniently arranged in the side wall 4 or in the bottom part 5 of the pan 2 made of metal or resin. Such opening can also serve to fill the pan 2 with the insulation material 3.

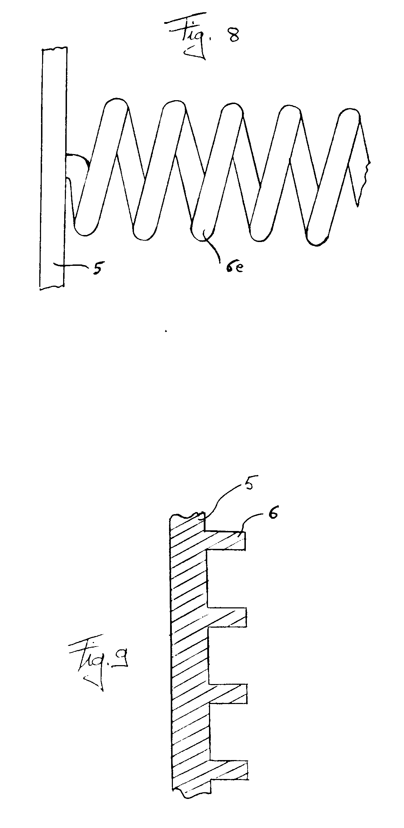

The heat transfer elements 6 are connected to the rear side of bottom 5 of the pan 2. These heat transfer elements 6 are made of any material having high thermal conductivity and preferably they are made of metal. The connection of the bottom 5 of the pan 2 with the heat transfer elements 6 furnishes excellent heat transmission through it. For metal - metal connections welding or soldering are preferred. The connection 20 of a metal element 6a with a resin based absorber 5a is shown in Fig. 4. The end of the element 6a is laminated around with resin 20 reinforced by mesh, chips or powder of metal or any other high heat conductivity material and it can be sticked to the absorber 5a to provide a large surface of connection in cross-section through which heat can be conducted from the absorber 5a to the metal element 6a. In another embodiment of the invention shown in Fig. 9, the plurality of fins or rods 6 and the absorber 5 are formed as a one piece element.

As can be seen in Figure 5, in a preferred embodiment, protuberances 12 are provided on the sides of the heat transfer elements 6b. As described above these protuberances 12 are cooperating with the elastomeric coating 7 to provide greater resistance to separation and hold the solar wall and massive wall in the assembled relationship against forces trying to separate them. This configuration also adds additional surfaces of contact between elastomeric coatings 7 and heat transfer means 6b and thereby permits to increase the heat transfer area and the rate at which heat is transferred. As heat transfer area is increased, protuberances are particularly advantageous when rods 6 are utilized as heat transfer elements.

The protuberances 12 can be formed as a plurality of wires 12 of a length to insure contact between the central portion of the heat transfer elements 6b and the massive wall 8 when in assembled relationship. Satisfactory results will be obtained if the length of the wires 12 is less than the thickness of the coating 7 when coatings made from materials of high conductivity are utilized as shown in Figure 5. Alternately, a separate pin or piece of heat conductive material having protuberances (not shown) can be inserted into the bores to receive the heat transfer rods and provide the adequate resistance to separation.

In other embodiments shown in Figures 6 to 8, the shape of the heat transfer elements may be used to provide sufficient resistance to separation. In the arrangement of Figures 6 and 7 the heat transfer elements 6c and 6d are formed into a corrugated configuration to increase the heat transfer area while providing the proper resistance to separation when the solar wall and massive wall are assembled. In the form illustrated in Figure 6, the undulations 12c of the fins 6c may take the form of a series of U - shaped sections 17 and 18. These corrugations of the fins 6d may be modified as illustrated in Figure 7 to include a series of V-shaped ridges 19.

The heat transfer elements of the present invention are capable of even further modification. For example, in the embodiment of Figure 8, spiral coils 6e of metal or similar material of high conductivity are secured to the bottom of the absorber 5 and provide spirally extending heat transfer elements to resist forces exerted on the solar wall while enhancing heat transfer to the massive wall through the elastomeric coating.

The shape and length of the heat transfer elements and the number of elements per square meter of the absorber surface depends on factors such as heat flow intensity, thermal conductivity, cross section area, as well as properties of massive wall section of the solar wall.

The preferred density of the heat transfer elements is e.g. carbon steel slab of 10mm diameter per square decimetre (100 cm$^2$) of surface area of the absorber 5.

The heat elements 6 are introduced inside the massive wall section 8 and the tight contact of these heat transfer elements 6 with the material of the massive wall 8 is achieved by installing pieces 7 of elastomeric based mixtures of appropriately high thermal conductivity. The elastomeric piece 7 coats the outside surface of the heat transfer element 6 and it is very well sticked to the material of the massive wall 8. Any elastomers filled with metal chips or powder as well as with graphite or carbon can be used to arrange the elastic connection 7 of the heat transfer elements 6 with massive wall section 8.

The wall according to the present invention provides low percentage of heat loss via the edging. For a thin steel pan or for resin side walls of the pan , the heat losses are below 10% of the total generated heat. In the wall according to the present invention, the heat from the absorber 5 is furnished directly to the interior of the massive part 8 of the wall by means of the heat transfer elements 6. So, the temperature of the absorber 5 is low compared to the known constructions.

Moreover, the construction of solar wall according to the present invention allows independent moves of massive wall section 8 and absorber 5. This is due to the heat transfer elements 6 covered with elastic coating 7 placed in appropriate holes in massive wall section 8. The wall according to the present invention can thus be installed in new buildings, which may settle during the first few years of operation.

The wall according to the present invention can also be installed using existing walls made of traditional ceramic materials like bricks. To install the wall, the openings in massive part 8 of the wall are made with appropriate diameter, length and according to the geometry of the rear side of the absorber 5. The, the elastic heat transporting cartridges are pressed to the inside of the holes and metal heat transfer elements 6 are then introduced to the inside of the cartridges. By installing separate absorbers 5 one beside another, the facades of different architecture can be arranged without any danger of breaking the construction of absorbers 5 which are flexibly fastened to the massive wall 8.

While this invention has been explained with reference to various embodiments thereof, it is not confined to the details set forth and this application is intended to cover any modifications and changes which may be made.

**Claims**

1. Wall for radiation absorption adapted to be secured to a massive wall (8) for transferring heat thereto, said wall comprising:
   an external section (1,3) permitting transmission of solar radiations and including an insulation layer (3), and
   an absorber (5;5a;5b) disposed behind said insulation layer (3),
   characterized in further comprising heat transfer means (6,6a;6b;6c;6d;6e) associated with said absorber (5;5a;5b), said heat transfer means being thermally connected to said absorber (5;5a;5b) to receive the generated heat therefrom, and said heat transfer means (6;6a;6b;6c;6d;6e) being adapted to be inserted in said massive wall (8) to thereby transmit said heat from said absorber (5;5a;5b) to said massive wall (8).

2. Wall according to claim 1, characterized in that said heat transfer means comprise a plurality of rods (6;6a;6b) or a plurality of fins (6c;6d) extending either generally perpendicular or obliquely relative to said absorber (5;5a;5b) so as to be introduced into the massive wall (8).

3. Wall according to any of claims 1 or 2, characterized in that the said heat transfer means (6;6a to 6e) are made of high thermal conductivity material.

4. Wall according to any of claims 1 to 3, characterized in that the said heat transfer means (6;6a to 6e) are welded, or soldered, or sticked to the absorber rear side to enhance the heat flow from the absorber (5;5a;5b) to the massive wall (8).

5. Wall according to any of claims 1 to 3, characterized in that said heat transfer means (6) and said absorber (5) are formed as a one piece element.

6. Wall according to any of claims 1 to 5, characterized in that said heat transfer means (6) are in direct contact with said massive wall (8) to thereby enhance the heat flow from said heat transfer means (6) to the massive wall (8).

7. Wall according to any of claims 1 to 6, characterized in that the part of said heat transfer means (6) which is located inside said massive wall (8) is surrounded by a flexible material (7) having an appropriate high thermal conductivity.

8. Wall according to any of claims 1 to 7, characterized in that said external section (1,3) further comprises an external transparent plate (1) and the translucent insulation layer (3) is tightly enclosed inside a chamber defined by said external transparent plate (1) and the absorber (5;5a;5b).

9. Wall according to claim 8, characterized in that said chamber is either filled with air or argon or partial vacuum is provided inside the chamber.

10. Wall according to claim 8, characterized in that the absorber (5;5a) is in a form of a pan (2,2a) tightly sticked to the external transparent plate (1).

11. Wall according to claim 10, characterized in that the bottom (5a) of the absorber pan (2) is made of high heat conductivity material and the side walls (4a) of the pan (2) are a thin layer made of same material.

12. Wall according to claim 8, characterized in that said absorber (5b) is made of high conductivity material and is connected to said external plate (1) by side walls (4b) made of low conductivity material.

13. Wall according to any of claims 7 to 12, characterized in that said heat transfer means (6;6b;6c;6d;6e) comprise protuberances (12) extending therefrom or has a shape (12c;19;6e) to increase the resistance to separation and the heat transfer by cooperation with said flexible material (7).

14. Wall according to any of claims 1 to 12, characterized in that pins made of high heat conductive material and having protuberances surround each of said heat transfer means (6) in the assembled relationship to provide greater resistance to separation.

Fig. 1

Fig. 2

Fig. 3

Fig. 4

Fig. 5

Fig. 6

Fig. 7

Fig. 8

5

6e

Fig. 9

5

6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 279 241 (HIMES)<br><br>* column 2, line 35 - column 3, line 4 *<br>* column 3, line 26 - column 3, line 44; figure 2 *<br><br>--- | 1-4,6,8,<br>9,14 | F24J2/00<br>F24J2/48 |
| X | WO-A-8 700 607 (LOHMEYER)<br><br>* page 18, line 17 - page 19, line 10 *<br>* page 22, line 7 - page 22, line 17; figures 7,9 *<br><br>--- | 1-3,5,6,<br>8,9 | |
| A | AT-A-375 125 (MITTACH)<br>* page 3, line 51 - page 4, line 10; figure 2 *<br><br>--- | 1 | |
| A | GB-A-2 054 824 (FEIST)<br>* page 3, line 1 - page 3, line 70; figures 2,7 *<br><br>--- | 1,7 | |
| A | FR-A-2 444 131 (ANVAR)<br>* page 5, line 3 - page 5, line 29 *<br>* page 6, line 7 - page 6, line 14 *<br>* page 9, line 11 - page 9, line 17; figures 2,9 *<br><br>--- | 1 | TECHNICAL FIELDS SEARCHED (Int. Cl.5)<br><br>F24J |
| A | US-A-4 058 109 (GRAMM)<br>* column 2, line 12 - column 2, line 44; figure 2 *<br><br>----- | 1,8,10 | |

The present search report has been drawn up for all claims

| Place of search | Date of completion of the search | Examiner |
|---|---|---|
| THE HAGUE | 13 AUGUST 1991 | BELTZUNG F. |

EPO FORM 1503 03.82 (P0401)